# EUROPÄISCHE PATENTSCHRIFT

(11) **EP 0 522 479 B1**
(45) Veröffentlichungstag und Bekanntmachung des Hinweises auf die Patenterteilung: **15.05.1996**
(21) Anmeldenummer: 92111390.8
(22) Anmeldetag: 04.07.1992
(51) Int. Cl.: G05D 16/04

(54) **Gasarmatur mit einem Gasdruckregler**
Gas fitting with a gas-pressure regulator
Installation pour conduit de gaz avec régulateur de pression de gaz

(30) Priorität: 11.07.1991 DE 4122931
(43) Veröffentlichungstag der Anmeldung: 13.01.1993
(73) Patentinhaber: G. Kromschröder Aktiengesellschaft, D-49074 Osnabrück (DE)
(72) Erfinder: Spiesser, Gilbert, D-7541 Straubenhardt 1 (DE)

(56) Entgegenhaltungen:
- DE-A- 2 849 265
- DE-A- 3 000 669
- DE-A- 3 345 561

## Beschreibung

Die Erfindung betrifft eine Gasarmatur mit einem Gasdruckregler, der mit wenigstens einem Sicherheitsventil in Reihe geschaltet ist, durch welches der Gasweg vollständig absperrbar ist, wobei das Stellglied des Regelventils des Gasdruckreglers ein Kolbenschieber ist, der ohne gleitenden Kontakt in mindestens einer den Gasdruckreglereinlaß mit dem -auslaß verbindenen Bohrung derart geführt ist, daß auch in Nullstellung des Kolbenschiebers zwischen der Wand der Bohrung und dem Kolbenschieber ein Strömungsspalt verbleibt, daß somit der Kolbenschieber keinen Nullabschluß bewirkt, entsprechend dem Gegenstand der Anmeldung P 40 01 329.4.

Aus der DE-A1-33 45 561 ist eine Gasdruckregler-Sicherheitsmagnetventil-Kombination bekannt, bei der der Gasdruckregler ein Stellglied mit Nullabschluß aufweist.

Das Stellglied eines Gasdruckreglers ist überlicherweise ein Ventilteller, der mit einem Ventilsitz zusammenwirkt. Es ergibt sich dann ein Ringspalt zwischen Stellglied und Ventilsitz, über welchen eine Eingangskammer mit einer Ausgangskammer des Gasdruckreglers verbunden ist. In der Eingangskammer herrscht ein ungeregelter Eingangsdruck. In der Ausgangskammer herrscht ein geregelter Ausgangsdruck. Die Reglermembran ist auf der einen Seite von dem Ausgangsdruck beaufschlagt. Auf der anderen entgegengesetzten Seite wirkt auf die Reglermembran eine Belastung, z. B. eine entsprechend vorbelastete Feder. Es stellt sich ein Gleichgewichtszustand mit einem solchen Ringspalt zwischen Ventilteller und Ventilsitz ein, daß der auf die Fläche der Stellmembran wirkende Ausgangsdruck der Vorlast die Waage hält. Es wird dadurch der Ausgangsdruck auf einen durch die Vorlast bestimmten Wert geregelt.

Auf den Ventilteller wirkt die Differenz zwischen Eingangs- und Ausgangsdruck. Das erzeugt eine zusätzliche Kraft im öffnenden Sinne, welche vom Eingangsdruck abhängt und die Regelung des Ausgangsdrucks stört. Es ist daher bekannt, durch eine ebenfalls von der Druckdifferenz zwischen Eingangs- und Ausgangsdruck beaufschlagten Entlastungsmembran eine Druckentlastung des Ventiltellers zu bewirken.

Die bekannten Gasdruckregler haben eine ungünstige Charakteristik im Bereich geringer Gasmengen. Schon ein geringer Hub des Ventiltellers gegenüber dem Ventilsitz bewirkt eine starke Änderung der hindurchtretenden Gasmenge. Dadurch wird die Regelgenauigkeit im Bereich kleiner Gasmengen schlecht.

Aus der EP-A1-0 437 837, die Stand der Technik nach A54(3) darstellt, ist ein Gasdruckregler bekannt, dessen Stellglied als Kolbenschieber ohne Nullabschluß ausgebildet ist. Ein solcher gestattet eine feinfühlige Regelung auch bei sehr geringen Gasmengen. Da der Kolbenschieber nicht dicht geführt wird, werden die Reibungskräfte an einer solchen Führung vermieden. Allerdings strömt auch in Schließstellung des Gasdruckreglers ständig Leckgas am Kolbenschieber vorbei. Die Leckgasmenge darf aus Sicherheitsgründen eine bestimmte Größenordnung nicht überschreiten. Außerdem bestimmt die Leckrate die Untergrenze des Regelbereichs. Eine große Leckmenge wirkt sich daher einschränkend auf den Regelbereich aus.

Demgemäß besteht die Aufgabe der Erfindung darin, eine Gasarmatur entsprechend der Hauptpatentanmeldung P 40 01 329.4 in ihrer Konstruktion derart zu optimieren, daß sich die Leckgasmengen verringern und sich der Regelbereich des Gasdruckreglers vergrößert.

Gemäß der Erfindung wird diese Aufgabe dadurch gelöst, daß der Gasdruckregler einen Schließanschlag aufweist, an welchem das Stellglied in der Nullstellung zur Anlage kommt.

In der Schließstellung liegt der Kolbenschieber stirnseitig auf dem Schließanschlag auf, so daß die Leckgasmengen vernachlässigbar klein werden. Durch diese einfache konstruktive Maßnahme wird außerdem der Regelbereich zu kleineren Gasmengen hin erweitert, da der Spalt zwischen dem Kolbenschieber und dem Schließanschlag einen zusätzlichen Regelquerschnitt im Bereich sehr geringer Gasmengen bildet.

Vorteilhafterweise ist der Schließanschlag ringförmig ausgebildet.

Eine wesentliche Weiterbildung der Gasarmatur nach der Erfindung besteht darin, daß der Gasdruckregler ein Servoreglermeßwerk enthält, das den Sollwert für den Gasdruckregler vorgibt. Die Regelkennlinie eines derart ausgestatteten Gasdruckreglers ist besonders genau. Außerdem ermöglicht das Servoreglermeßwerk den Sollwert des Ausgangsdruckes auf beliebige Art und Weise zu realisieren.

Eine besonders vorteilhafte Weiterbildung der Erfindung besteht darin, daß das Sicherheitsventil mit dem Gasdruckregler zu einer integrierten Baugruppe vereinigt ist. Vorteilhafterweise ist der Gasdruckregler zwischen zwei Sicherheitsventilen angeordnet. Diese kompakte Bauweise ist besonders platzsparend und kostengünstig.

Nach einem weiteren Merkmal der Erfindung ist das Stellglied sowohl vom Eingangsdruck des Gasdruckreglers als auch von dessen Ausgangsdruck vollständig druckentlastet.

Vorteilhafterweise ist das Stellglied spulenförmig ausgebildet.

Schließlich ist eine besonders vorteilhafte Weiterbildung der Erfindung gekennzeichnet durch eine parallel zu dem Stellglied des Gasdruckreglers herstellbare Verbindung zwischen Einlaßkammer und Auslaßkammer des Gasdruckreglers, die von einem einstellbaren Ventil beherrscht ist. Dadurch kann dem Brenner sofort nach dem Öffnen der Ventile eine einstellbare ungeregelte Gasmenge (Startgas) zugeführt werden.

Als erfindungswesentlich offenbart, gelten auch solche Kombinationen der erfindungsgemäßen Merkmale, die von den obigen Verknüpfungen abweichen.

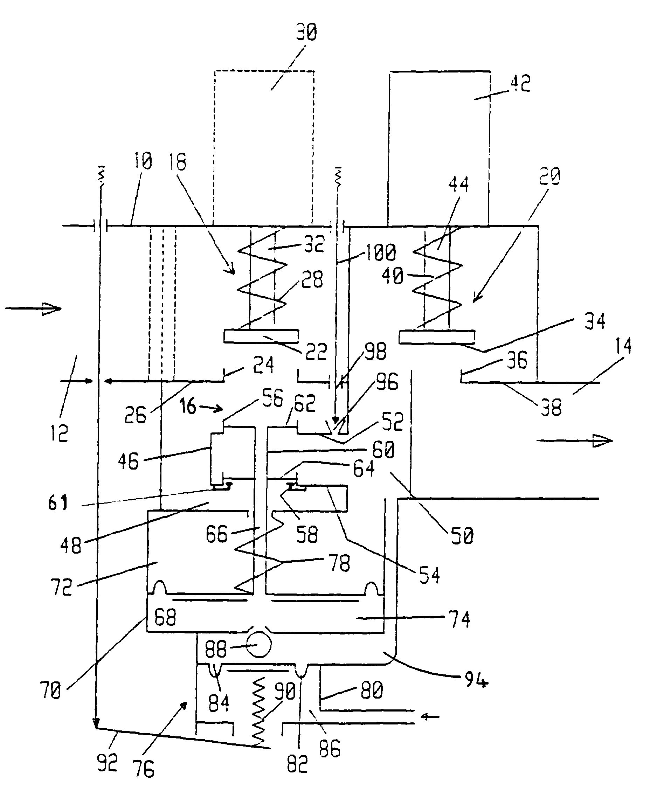

Ein Ausführungsbeispiel der Erfindung ist nachstehend unter Bezugnahme auf die Zeichnung näher erläutert, die schematisch einen Schnitt durch eine Gasarmatur mit einem Gasdruckregler und zwei Sicherheitsventilen zeigt.

In der Figur ist mit 10 ein Gehäuse einer Gasarmatur bezeichnet. Die Gasarmatur weist einen Einlaß 12 und einen Auslaß 14 auf. Zwischen Einlaß 12 und Auslaß 14 ist ein Gasdruckregler 16 vorgesehen. Dem Gasdruckregler 16 ist ein erstes Sicherheitsventil 18 vorgeschaltet. Weiterhin ist dem Gasdruckregler 16 ein zweites Sicherheitsventil 20 nachgeschaltet.

Das Sicherheitsventil 18 weist einen Ventilteller 22 auf, der mit einem Ventilsitz 24 zusammenwirkt. Durch den Ventilsitz 24 hindurch ist die Verbindung zwischen dem Einlaß 12 und dem Gasdruckregler 16 hergestellt, die durch eine den Ventilsitz 24 aufweisende Wandung voneinander getrennt sind. Der Ventilteller 22 steht unter dem Einfluß einer vorgespannten Druckfeder 28, welche den Ventilteller 22 auf den Ventilsitz 24 zu drücken sucht. Der Ventilteller 22 wird von einem Hubmagneten 30 über einen Ventilstößel 32 gegen die Wirkung der Druckfeder 28 von dem Ventilsitz 24 abgehoben.

In entsprechender Weise meist das Sicherheitsventil 20 einen Ventilteller 34 auf, der mit einem Ventilsitz 36 zusammenwirkt. Durch den Ventilsitz 36 hindurch ist die Verbindung zwischen dem Gasdruckregler 16 und dem Auslaß 14 hergestellt, die durch eine den Ventilsitz 36 aufweisende Wandung 38 voneinander getrennt sind. Der Ventilteller 34 steht unter dem Einfluß einer vorgespannten Druckfeder 40, welche den Ventilteller 34 auf den Ventilsitz 36 zu drücken sucht. Der Ventilteller 34 wird von einem Hubmagneten 42 über einen Ventilstößel 44 gegen die Wirkung der Druckfeder 40 von dem Ventilsitz 36 abgehoben.

Der Gasdruckregler 16 weist eine Trennwand 46 auf. Die Trennwand 46 trennt eine Einlaßkammer 48 des Gasdruckreglers 16 und eine Auslaßkammer 50. Die Trennwand 46 bildet eine Einbuchtung mit zwei zueinander parallelen Flächen 52 und 54. In den Flächen 52 und 54 sind fluchtende Bohrungen 56 bzw. 58 vorgesehen, in denen ein Kolbenschieber 60 lose beweglich ist. Der Kolbenschieber 60 ist ohne gleitenden Kontakt in den Bohrungen 56 und 58 geführt, so daß zwischen den Wandungen der Bohrungen 56 und 58 und dem Kolbenschieber 60 ein Spalt bleibt.

Unterhalb der Bohrung 58 ist ein ringförmiger Schließanschlag 61 angebracht. In der Schließstellung liegt der Kolbenschieber 60 stirnseitig auf dem Schließanschlag 61 auf, so daß der Spalt zwischen der Bohrung 58 und dem Kolbenschieber 60 verschlossen wird. Dadurch werden in der Schlußstellung des Gasdruckreglers die Leckgasmengen vernachlässigbar klein, da nur noch Leckgas durch den Spalt zwischen der Bohrung 56 und dem Kolbenschieber strömen kann.

Außerdem wird der Regelbereich zu kleineren Gasmengen hin erweitert, da der Spalt zwischen der Stirnseite des Kolbenschiebers 60 und dem Schließanschlag 61 einen zusätzlichen Regelquerschnitt im Bereich sehr geringer Gasmenge bildet.

Es ist auch möglich, unterhalb der Bohrung 56 ebenfalls einen Schließanschlag anzubringen. Dies ist jedoch montagetechnisch sehr schwierig.

Der Kolbenschieber 60 ist spulenförmig mit zwei vorstehenden, scheibenförmigen Körpern 62 und 64. Der Körper 62 ist in der Bohrung 56 beweglich. Der Körper 64 ist in der Bohrung 58 beweglich. Die Körper 62 und 64 sind durch einen Stößel 66 miteinander verbunden. Die beiden Körper 62 und 64 haben gleiche Querschnitte. Der Körper 62 ist auf der Oberseite von dem Eingangsdruck beaufschlagt, der auf den Kolbenschieber 60 eine dem Eingangsdruck proportionale Kraft nach unten in der Figur ausübt. Der Körper 64 ist auf der Unterseite von dem Eingangsdruck beaufschlagt, der auf den Kolbenschieber eine dem Eingangsdruck proportionale Kraft nach oben in der Figur ausübt. Diese beiden dem Eingangsdruck proportionalen Kräfte heben sich auf.

Auf der Unterseite ist der Köper 62 von dem Ausgangsdruck in der Auslaßkammer 50 beaufschlagt, der eine dem Ausgangsdruck proportionale Kraft nach oben in der Figur auf den Kolbenschieber 60 ausübt. Der Körper 64 ist auf der Oberseite von dem Ausgangsdruck beaufschlagt, der eine dem Ausgangsdruck proportionale Kraft nach unten in der Figur auf den Kolbenschieber ausübt. Auch die beiden dem Ausgangsdruck proportionalen Kräfte heben sich auf. Der Kolbenschieber 60 ist somit vollständig druckentlastet.

Der Kolbenschieber 60 ist über den Stößel 66 mit einer Stellmembran 68 verbunden. Die Stellmembran 68 ist in ein Membrangehäuse 70 eingespannt. Die Stellmembran 68 unterteilt das Membrangehäuse 70 in eine erste Membrankammer 72 und eine zweite Membrankammer 74. Die erste Membrankammer 72 steht mit der Auslaßkammer 60 des Gasdruckreglers 16 in Verbindung. Die zweite Membrankammer 74 kann über ein Servorreglermeßwerk 76 von einem Solldruck beaufschlagt werden.

Der Stößel 66 ist durch die Wandung des Membrangehäuses 70 abdichtend hindurchgeführt. In der ersten Membrankammer 72 ist um den Stößel 66 herum eine Schraubenfeder 78 angeordnet. Die Schraubendruckfeder 78 sucht die Stellmembran 68 nach unten in der Figur zu drücken (Ruhestellung).

Das Servoreglermeßwerk 76 enthält in einem Gehäuse 80 eine Membran 82. Die Fläche der Membran 82 ist wesentlich kleiner als die Fläche der Stellmembran 68 des Gasdruckreglers 16. Die Membran 82 unterteilt das Gehäuse 80 des Servoreglermeßwerkes 76 in eine "obere" Membrankammer 84 und eine "untere" Membrankammer 86. Die obere Membrankammer 84 grenzt an die zweite Membrankammer 74 des Gasdruckreglers 16 an und ist mit dieser über ein gesteuertes Ventil 88 verbunden. Das Ventil 88 ist von der Membran 82 gesteuert. Die Membran 82 ist von einer vorgespannten Schraubenfeder 80 belastet. Die Schraubenfeder 90 sitzt in der unteren Membrankammer 86. Die Vorspannung der Schraubenfeder 90 ist durch einen Stellmechanismus 92 einstellbar. Außerdem kann auf die untere Membrankammer 86 über eine Leitung 94 ein pneumatischer Steuerdruck, z. B. der Feuerungsdruck, aufgeschaltet werden. Die obere Membrankammer 84 des Servoreglermeßwerkes 76 ist die Leitung 94 mit der Auslaßkammer 50 verbunden.

An der relativ kleinen Membran 82 wird der Ausgangsdruck der Auslaßkammer gegen die Vorspannung der Schraubenfeder 90 ausgewogen. Die Membran steuert das Ventil 88. Dadurch wird über die Stellmembran 68 der Kolbenschieber 60 gesteuert. Die Funktion des Servoreglermeßwerkes 76 ist an sich bekannt und daher hier nicht mehr im einzelnen beschrieben.

Eine Absperrung des Gasdurchganges bei der beschriebenen Gasarmatur erfolgt durch die Sicherheitsventile 18 und 20.

Zwischen der Einlaßkammer 48 des Gasdruckreglers 16 und der Auslaßkammer 50 besteht eine direkte Verbindung 96, die von einem einstellbaren Ventil 98 beherrscht ist. Das Ventil 98 ist über eine Stellvorrichtung 100 von außen einstellbar. Das ermöglichst eine einstellbare, ungeregelte Gasmenge (Startgas) dem Brenner sofort nach dem Öffnen der Ventile 18, 20 zuzuführen. Die Zuführung der vollen und geregelten Gasmenge kann erst erfolgen, wenn die Stellmembran 68 den Kolbenschieber 60 von der Ruhestellung in die Arbeitsstellung gebracht hat.

## Patentansprüche

1. Gasarmatur mit einem Gasdruckregler, der mit wenigstens einem Sicherheitsventil (18, 20), in Reihe geschaltet ist, durch welches der Gasweg vollständig absperrbar ist, wobei das Stellglied (60) des Regelventils des Gasdruckreglers (16) ein Kolbenschieber ist, der ohne gleitenden Kontakt in mindestens einer den Gasdruckreglereinlaß (12) mit dem -auslaß (14) verbindenden Bohrung (56, 58) derart geführt ist, daß auch in Nullstellung des Kolbenschiebers zwischen der Wand der Bohrung und dem Kolbenschieber ein Strömungsspalt verbleibt, daß somit der Kolbenschieber keinen Nullabschluß bewirkt, dadurch gekennzeichnet,
daß der Gasdruckregler (16) einen Schließanschlag (61) aufweist, an welchem das Stellglied (60) in der Nullstellung zur Anlage kommt.

2. Gasarmatur nach Anspruch 1,
dadurch gekennzeichnet,
daß der Schließanschlag (61) ringförmig ausgebildet ist.

3. Gasarmatur nach Anspruch 1 oder 2,
dadurch gekennzeichnet,
daß der Gasdruckregler (16) ein Servoreglermeßwerk (76) enthält, daß den Sollwert für den Gasdruckregler vorgibt.

4. Gasarmatur nach einem der Ansprüche 1 bis 3,
dadurch gekennzeichnet,
daß das Sicherheitsventil (18, 20) mit dem Gasdruckregler (16) zu einer integrierten Baugruppe vereinigt ist.

5. Gasarmatur nach einem der Ansprüche 1 bis 4,
dadurch gekennzeichnet,
daß Stellglied (60) sowohl vom Eingangsdruck des Gasdruckreglers (16) als auch von dessen Ausgangsdruck vollständig druckentlastet ist.

6. Gasarmatur nach einem der Ansprüche 1 bis 5,
dadurch gekennzeichnet,
daß das Stellglied (60) spulenförmig ausgebildet ist.

7. Gasarmatur nach einem der Ansprüche 1 bis 6,
gekennzeichnet durch eine parallel zu dem Stellglied (60) des Gasdruckreglers (16) herstellbare Verbindung zwischen Einlaßkammer (48) und Auslaßkammer (50) des Gasdruckreglers (16), die von einem einstellbaren Ventile (96) beherrscht ist.

## Claims

1. Gas fitting with a gas govemor which is switched in series with at least one safety valve (18, 20) permitting the flow of gas to be completely shut off, the actuator (60) of the control valve of the gas govemor (16) being a piston valve which is disposed without sliding contact in at least one bore (56, 58) connecting the gas govemor inlet (12) with the gas governor outlet (14) in such a manner that, even in the off-position of the piston valve, there is still a flow gas between the wall of the bore and the piston valve so that the piston valve does not effect the off-position, characterised in that,
the gas govemor (16) exhibits a closing stop (61) against which the actuator (60) rests in the off-position.

2. Gas fitting according to claim 1,
characterised in that,
the closing stop (61) is annular-shaped.

3. Gas fitting according to claim 1 or 2,
characterised in that,
the gas governor (16) contains a servo-control metering unit (76) which gives the set point for the gas governor.

4. Gas fitting according to any one of claims 1 through 3,
characterised in that,
the safety valve (18, 20) forms an integrated assembly with the gas govemor (16).

5. Gas fitting according to any one of claims 1 through 4,
characterised in that,
the actuator (60) is completely relieved both from the inlet pressure and from the outlet pressure of the gas governor (16).

6. Gas fitting according to any one of claims 1 through 5,
characterised in that,
the actuator (60) is coil-shaped.

7. Gas fitting according to any one of claims 1 through 6,
characterised in that,
a connection can be established between the inlet chamber (48) and the outlet chamber (15) of the gas governor (16) parallel to the actuator (60) of the gas governor (16), said connection being controlled by an adjustable valve (96).

## Revendications

1. Installation pour conduit de gaz avec régulateur de pression de gaz, montée en série avec au moins une vanne de sécurité (18, 20) permettant d'obturer complètement le passage du gaz, l'organe de réglage (60) de la vanne de réglage du régulateur de pression de gaz (16) étant un robinet à piston qui est logé sans contact de glissement dans au moins un alésage (56, 58) reliant l'entrée (12) à la sortie (14) du régulateur de pression de gaz de la sorte que, même en position zéro du robinet à piston, il reste un interstice d'écoulement entre la paroi de l'alésage et le robinet à piston ce qui fait que le robinet à piston n'entraîne pas une fermeture zéro, caractérisée par le fait que le régulateur de pression de gaz (16) présente une butée de fermeture (61) sur laquelle repose l'organe de réglage (60) en position zéro.

2. Installation pour conduit de gaz selon la revendication 1, caractérisée par le fait que la butée de fermeture (61) présente une forme annulaire.

3. Installation pour conduit de gaz selon la revendication 1 ou 2, caractérisée par le fait que le régulateur de pression de gaz (16) comporte un servo-élément de mesure (76) donnant la valeur de consigne pour le régulateur de pression de gaz.

4. Installation pour conduit de gaz selon l'une des revendications 1 à 3, caractérisée par le fait que la vanne de sécurité (18, 20) forme, avec le régulateur de pression de gaz (16), un assemblage intégré.

5. Installation pour conduit de gaz selon l'une des revendications 1 à 4, caractérisée par le fait que l'organe de réglage (60) est complètement équilibré par rapport à la pression d'entrée et la pression de sortie du régulateur de pression de gaz (16).

6. Installation pour conduit de gaz selon l'une des revendications 1 à 5, caractérisée par le fait que l'organe de réglage (60) présente la forme d'une bobine.

7. Installation pour conduit de gaz selon l'une des revendications 1 à 6, caractérisée par le fait qu'une liaison parallèle à l'organe de réglage (60) du régulateur de pression de gaz (16) peut être créée entre la chambre d'entrée (48) et la chambre de sortie (50) du régulateur de pression de gaz (16), ladite liaison étant contrôlée par une vanne réglable (96).
